Europäisches Patentamt

European Patent Office

Office européen des brevets

(11) Veröffentlichungsnummer: **0 420 022 A2**

# EUROPÄISCHE PATENTANMELDUNG

(21) Anmeldenummer: 90118024.0

(51) Int. Cl.5: **C04B 26/16**

(22) Anmeldetag: 19.09.90

(30) Priorität: 28.09.89 DE 3932406

(43) Veröffentlichungstag der Anmeldung:
03.04.91 Patentblatt 91/14

(84) Benannte Vertragsstaaten:
AT BE CH DE DK ES FR GB IT LI LU NL SE

(71) Anmelder: **Henkel Kommanditgesellschaft auf Aktien**
**Postfach 1100 Henkelstrasse 67**
**W-4000 Düsseldorf 1(DE)**

(72) Erfinder: **Höfer, Rainer, Dr.**
**Klever Strasse 31**
**W-4000 Düsseldorf 30(DE)**
Erfinder: **Grützmacher, Roland**
**Heinrich-Heine-Strasse 2**
**W-5603 Wülfrath(DE)**
Erfinder: **Pesch, Wolfgang**
**Noithausener Strasse 10**
**W-4048 Grevenbroich(DE)**

(54) **Schnellabbindende Dämmasse.**

(57) Es werden schnellabbindende Dämmörtel mit isolierenden Eigenschaftgen auf Basis körniger, weitgehend reaktivwasserfreier Festkörperpartikel und gewünschtenfalls weiterer Zuschläge und/oder Additive beschrieben. Diese Dämmörtel sollen gute wärme- und schallisolierende Eigenschaften besitzen, nach kurzer Zeit trittfest ausgehärtet sein und eine ausreichende Wärmestabilität zeigen. Dies läßt sich durch die Verwendung von 2-Komponenten-Polyurethan-Systemen als organische Bindemittel für derartige schnellabbindende Dämmörtel realisieren.

EP 0 420 022 A2

EP 0 420 022 A2

## SCHNELLABBINDENDE DÄMMASSE

Die Erfindung betrifft die Verwendung von 2-Komponenten-Polyurethan-Systemen als organische Bindemittel für schnellabbindende Dämmörtel mit isolierenden Eigenschaften sowie ein Verfahren zu deren Herstellung.

Im Baubereich werden für eine Vielzahl spezieller Anwendungen isolierende Dämmörtel eingesetzt. Dazu gehören zum Beispiel Putz- und Mauermörtel, die vorwiegend im Wandbereich eingesetzt werden, hydraulisch abbindende Trockenmörtel zur Herstellung der Dämmstoffschicht für dreischalige Hausschornsteine, Spezialdämmörtel zum Verfüllen von Installationswandschlitzen sowie schall- und wärmedämmende Mörtel im Decken-, Zwischendecken- und Bodenbereich. Als Füllkörper können in diesen Dämmörteln verschiedenste Materialien eingesetzt werden, meistens handelt es sich dabei um mineralische Stoffe wie Kies oder Split. Um derartige Füllstoffe sachgerecht für Isolierzwecke einsetzen zu können, ist es erwünscht, daß diese in zusammenhängenden Stücken oder Massen gebunden werden. Diese Ab bindung erfolgt meist durch hydraulisch abbindende anorganische Materialien wie Zement. Die Abbindung soll möglichst schnell erfolgen, um von Witterungsschwankungen weitestgehend unabhängig zu sein und nach möglichst kurzer Zeit eine genügende Festigkeit sicherzustellen, um die Ausführung weiterer Bauarbeiten nicht zu behindern. Im Hinblick auf den praktischen Einsatz in der Bauindustrie muß natürlich auch die Wirtschaftlichkeit gewährleistet sein. Daneben wird von dem Bindemittel bzw. von dem Mörtel nach Möglichkeit auch eine leichte Verarbeitbarkeit, eine ausreichende Wärmestandfestigkeit, geringes Gewicht, Witterungsbeständigkeit und hohe Festigkeit bei möglichst geringem Bindemittelanteil gefordert. So hat zum Beispiel Zement als Bindemittel eine zu lange Abbindezeit, Bitumen erweist sich nicht als ausreichend wärmestabil, und Wasserglas erreicht keine ausreichende Festigkeit bzw. Begehbarkeit.

Ziel der vorliegenden Erfindung ist es, ein Bindemittel für Dämmmörtel bereitzustellen, welches auch bei sparsamem Einsatz eine ausreichende Festigkeit erreicht, nach der Verarbeitung des Mörtels in relativ kurzer Zeit aushärtet, eine ausreichende Wärmestandfestigkeit aufweist und neben weiteren erwünschten Eigenschaften wie geringes Gewicht, Witterungsbeständigkeit und einfacher Handhabbarkeit, auch den Gesichtspunkt der Wirtschaftlichkeit erfüllt.

Diese Aufgabenstellung wurde technisch gelöst durch die Verwendung von 2-Komponenten-Polyurethan-Systemen als organische Bindemittel für schnellabbindende Dämmörtel mit isolierenden Eigenschaften auf Basis körniger, weitgehend reaktivwasserfreier Festkörperpartikel und gewünschtenfalls weiterer Zuschläge und/oder Additive.

Dazu werden zum Beispiel Puffperlit als Festkörperpartikel und ein oleochemisches Polyol zusammen mit einem handelsüblichen Polyisocyanat als 2-Komponenten-Polyurethan-System in einer Zement- oder Betonmischmaschine innig zu einem Dämmörtel miteinander vermengt und anschließend zum anteiligen oder vollständigen Verfüllen von Formen oder Hohlräumen bei Bauarbeiten eingesetzt.

Insbesondere für Wärme- und Schallschutzisolierungen werden im Baubereich sogenannte Dämmörtel oder Dämmassen benötigt. Diese basieren meistens auf körnigen Festkörperpartikel, welche Kunststoffe und/oder natürliche Materialien sein können. Bei den schnellabbindenden Dämmörteln der Erfindung werden 2-Komponenten-Polyurethan-Systeme als organische Bindemittel verwendet.

Polyurethanklebstoffe sind seit Jahren bekannt und weit verbreitet. Von besonderer Wichtigkeit, insbesondere bei technischen Anwendungen, sind dabei die 2-Komponenten-Klebstoffe. Die ersten dieser Art wurden bereits im April 1941 als DE 69 267 angemeldet. Derartige 2-Komponenten-Polyurethan-Klebstoffe bestehen aus einer Isocyanatkomponente der Funktionalität 2 und größer und einem Harz bzw. einer Polyolkomponente. Im allgemeinen werden derartige 2-Komponenten-Klebstoffe vom Verwender vor dem Verkleben zu einer Reaktionsmischung verrührt, die dann nach Auftragen auf die zu verklebenden Substrate aushärtet. Als Bindemittel für schnellabbindende Mörtel sind derartige 2-Komponenten-Polyurethan-Systeme bislang nicht bekannt.

Die beiden Komponenten des 2-Komponenten-Polyurethan-Systems werden im folgenden als Reaktivkomponenten (I) und (II) bezeichnet, wobei unter (I) Isocyanatverbindungen und (II) die Harze bzw. Polyole zu verstehen sind. In einer bevorzugten Ausführungsform besitzt (I) eine Funktionalität von 2 bis 10. Als besonders günstig kann sich eine Funktionalität von 2 bis 4 erweisen. Da Isocyanate mit Wasser unter Bildung gasförmigen Kohlendioxids reagieren können, ein Aufschäumen des Bindemittels aber unerwünscht ist, da möglichst wenig davon verwendet werden soll, um eine punktuelle Haftung zwischen den Festkörperpartikel zu erreichen, werden als (II) bevorzugt weitgehend wasserfreie Polyole verwendet. Aus gleichem Grunde sind die Festkörperpartikel weitgehend reaktivwasserfrei. Auch bei den gewünschtenfalls einsetzbaren weiteren Zuschlägen und/oder Additiven erweist sich eine weitgehende Wasserfreiheit als günstig.

Bevorzugt verwendbare Isocyanatverbindungen sind aliphatische Diisocyanate und/oder aromatische

2

Diisocyanate. Die aliphatischen Verbindungen können auch monocyclisch oder polycyclisch sein. In einer besonderen Ausführungsform werden als aromatische Isocyanatverbindungen Toluylendiisocyanat und/oder Diphenylmethandiisocyanat (MDI) eingesetzt. Besonders geeignet ist technisches Diphenylmethandiisocyanat mit einem Gehalt an höherfunktionellen Diisocyanaten, so daß sich eine mittlere Funktionalität größer als 2 ergibt. Ein weiteres geeignetes aromatisches Diisocyanat ist Xylylendiisocyanat. Darüber hinaus kann eine Vielzahl aliphatischer Isocyanate der Funktionalität 2 und größer eingesetzt werden. Bevorzugt sind hierzu Isophorondiisocyanat und Dicyclohexylmethandiisocyanat als cyclische aliphatische Diisocyanate. Weitere geeignete Verbindungen sind aliphatische, geradkettige Diisocyanate, wie sie durch Phosgenisierung von Diaminen gewonnen werden, zum Beispiel Tetramethylendiisocyanat oder Hexamethylendiisocyanat.

Als Reaktivkomponente (I) in den erfindungsgemäßen 2-Komponenten-Polyurethan-Systemen können außer den mehrfunktionellen Isocyanatverbindungen auch prepolymere Isocyanatverbindungen eingesetzt werden. Unter Prepolymeren werden hier Addukte mehrfunktioneller Isocyanate an mehrfunktionelle Alkohole verstanden. Diese Prepolymeren oder auch Polyurethanprepolymeren weisen bevorzugt im Mittel mindestens zwei Isocyanatgruppen pro Molekül auf. Bevorzugt werden Addukte von aliphatischen und/oder aromatischen Diisocyanaten mit Di- und/oder Triolen wie zum Beispiel die Umsetzungsprodukte eines der vorstehenden aromatischen oder aliphatischen Diisocyanate mit Ethylenglykol, Propylenglykol, Glycerin, Trimethylolpropan und/oder Pentarerythrit. Auch Umsetzungsprodukte von Diisocyanaten mit Polyetherpolyolen, zum Beispiel Polyetherpolyolen auf Basis Polyethylenoxid oder auf Basis Polypropylenoxid können zumindest anteilsweise als Prepolymere verwendet werden.

Als Reaktivkomponente (II) für 2-Komponenten-Polyurethan-Systeme sind als Stand der Technik Polyetherpolyole, Polyesterpolyole und Polyetherpolyesterpolyole bekannt. Derartige Polyole werden üblicherweise auf synthetischem Weg aus dem Rohstoff Erdöl hergestellt. Unter anderem besteht aufgrund knapper werdender Erdölresourcen ein Bedarf Polyole einzusetzen, die aus regenerierbaren Rohstoffen, z.B. natürlichen Fetten und Ölen, herstellbar sind.

In einer bevorzugten Ausführungsform werden daher als Reaktivkomponente (II) wenigstens anteilsweise oleochemische Polyole eingesetzt. Unter oleochemischen Polyolen versteht man im allgemeinen Polyole, die auf der Basis natürlicher Öle und Fette hergestellt wurden. Bevorzugt angewendet werden im Sinne der Erfindung Rizinusöl und/oder Folgeprodukte epoxidierter Fettstoffe. Als Rizinusöl kann insbesondere Rizinusöl mit einer OH-Zahl von 160 bis 170 bei einer OH-Funktionalität von etwa 2,5 bis 3 eingesetzt werden. Unter den Folgeprodukten epoxidierter Fettstoffe werden Polyole mit mehr als 10 C-Atomen und zwei oder mehr Hydroxylgruppen verstanden, welche durch Umsetzung von epoxidierten Fettalkoholen, epoxidierten Fettsäureestern und/oder epoxidierten Fettsäureamiden mit aliphatischen und/oder aromatischen Alkoholen der Funktionalität 1 bis 10 und/oder mit di- oder trifunktionellen Phenolen unter Epoxidringöffnung und gewünschtenfalls Umesterung der Fettsäureester und/oder nachfolgender Reaktion mit $C_2$ bis $C_4$-Epoxiden hergestellt worden sind. Bevorzugt sind dabei Additionsprodukte aus epoxidierten Triglyceridölen it $C_1$ - $C_8$-Monoalkoholen, insbesondere bevorzugt werden solche Additionsprodukte, die alkoxyliert, vorzugsweise ethoxyliert und/oder propoxyliert sind.

Derartige Polyole für 2-Komponenten-Polyurethan-Klebstoffe, die zumindest überwiegend auf nachwachsenden Rohstoffen basieren und bevorzugt bei der vorliegenden Erfindung eingesetzt werden, sind zum Beispiel in der DE 33 47 045 und in der DE 34 70 421 beschrieben.

Zur Einstellung und Optimierung bestimmter anwendungstechnischer Parameter wie Topfzeit, Viskosität, Durchhärtungszeit, Vernetzungsgrad und Elastizität des ausgehärteten Bindemittels, werden die oleochemischen Polyole in einer besonderen Ausführungsform in Abmischung mit niedermolekularen Polyolen und/oder Aminen verwendet. Dabei kommen insbesondere Glycerin, Trimethylolpropan, Diglycerin, Polyglycerin, Ethylendiamin, Triethanolamin und Methyldiethanolamin zum Einsatz. Diese Substanzen können gegebenenfalls alkoxyliert sein, bevorzugt werden die Ethoxylierungs- und/oder Propoxylierungsprodukte.

Als körnige, weitgehend reaktivwasserfreie Festkörperpartikel werden bevorzugt Mineral- und/oder Kunststoffpartikel eingesetzt. Um zu besonders guten schall- und/oder wärmeisolierenden Eigenschaften des Dämmörtels zu gelangen, werden bevorzugt Festkörperpartikel mit einer porigen Struktur eingesetzt. Besonders geeignet sind porige Partikel mit zumindest überwiegend körniger Struktur, insbesondere wenn deren mittlere Größtkorngröße im Bereich von 0,1 bis 10 mm liegt. Sehr gute Ergebnisse werden mit porigen Mineralstoffen erzielt, deren mittlere Größtkorngröße 1 bis 6 mm beträgt. Diese Ausführungsform ist deshalb besonders bevorzugt.

Die erfindungsgemäß verwendbaren Kunststoffpartikel sind zum Beispiel Granulate gängiger Massenkunststoffe wie PVC, Polypropylen, Polyethylen und Polyurethane. Bevorzugt werden jedoch Kunststoffpartikel mit poriger Struktur, also Schaumstoffe, zum Beispiel aufgeschäumtes Polystyrol und Polyurethanschaum.

Als körnige Mineralstoffe kommen zum Beispiel im Baubereich übliche Materialien in Form von Sand, Kies und/oder Split in Betracht. Aufgrund des erhöhten Dämmeffekts werden porige Mineralstoffe wie Tuff- oder Bimsgesteine bevorzugt. Geeignet sind auch Vermiculite, Glas-und Aluminiumsilikathohlkugeln sowie geblähte Tonkugeln. Ein im Sinne der Erfindung besonders geeigneter und damit bevorzugter körniger, poriger Mineralstoff ist Perlit, ein vulkanisches Rhyolit-oder Quarzporphyrglas. Dieses enthält viele kleine Wasser- und Gaseinschlüsse. Erhitzt man Perlit auf über 1200 °C, so erhält man aufgrund der Expansion der Einschlüsse einen federleichten, bimssteinähnlichen Gesteinsschaum vom etwa zwanzigfachen Volumen, den sogenannten Puffperlit oder in Anlehnung an die angelsächsische Schreibweise Perlite. Neben den bereits angeführten hervorragenden dämmenden Eigenschaften ist dieses Produkt unbrennbar, witterungsbeständig, fault und schimmelt nicht und ist deshalb gut im Baubereich, auch im Außenbereich einsetzbar. In einer besonderen, vorteilhaften Ausführungsform wird hydrophobierter Puffperlit eingesetzt, der zusätzlich erwünschtermaßen wasserabweisend wirkt und zu einer besseren Haftung des Bindemittels führt.

Sowohl aus wirtschaftlichen Gründen als auch wegen einer möglichen Beeinträchtigung der Dämmeigenschaften und der Gewichtsersparnis, sollen in einer bevorzugten Ausführungsform die Zwischenräume zwischen den Festkörperpartikeln des Dämmörtels und/oder die Poren der Festkörperpartikel nicht vollständig durch das Bindemittel ausgefüllt sein, sondern idealerweise das Bindemittel nur in einer solchen Mengen vorhanden sein, die ausreicht, daß die Festkörperpartikel an ihren Berührungsstellen haftfest miteinander verbunden werden. Als besonders geeignet haben sich dabei Mengen von 25 bis 150 g, vorzugsweise 50 bis 100 g organisches Bindemittel pro 1 dm$^3$ porigen Mineralstoffs erwiesen. Eine besonders bevorzugte Ausführungsform verwendet 70 bis 80 g Bindemittel pro 1 dm$^3$ porigen Mineralstoffs.

Als besonders günstig hat es sich erwiesen, wenn in dem 2-Komponenten-Polyurethan-System als organisches Bindemittel die Reaktivkomponente (I) zur Reaktivkomponete (II) ein Verhältnis von 50 : 100 bis 75 : 100, insbesondere 60 : 100 bis 70 : 100 aufweist. Dies gilt insbesondere dann, wenn die Reaktivkomponente einen NCO-Gehalt von 28 bis 32 Gew.-%, bevorzugt etwa 31 Gew.-% und die Reaktivkomponente (II) eine OH-Zahl von 220 bis 300, bevorzugt 250 bis 270 aufweist.

Des weiteren kann der schnellabbindende Dämmörtel gewünschtenfalls weitere Zuschläge und/oder Additive enthalten. Als Zuschläge sind übliche Füllstoffe wie Kreide, Kalkmehl, Kieselsäure und/oder Zeolithpulver bevorzugt. Zeolithe können dabei nicht nur als Füllstoff, sondern auch als Trockenmittel dienen. Ähnliches gilt für Calciumoxid. Weiterhin können auch organische Füllstoffe, zum Beispiel Faserkurzschnitte verwendet werden. Die Füllstoffe können dabei vor der Herstellung des Dämmörtels bereits zumindest anteilsweise in Abmischung mit einer der beiden Reaktivkomponenten, bevorzugt mit der Reaktivkomponente (II), vorliegen. Als Additive werden gewünschtenfalls übliche Hilfsstoffe wie Beschleuniger, Stabilisatoren, Lösungsmittel, Weichmacher, Flammschutzmittel, Pigmente, Alterungsschutzmittel und/oder Verzögerer eingesetzt.

Als Beschleuniger sind hierbei zum Beispiel tertiäre Basen, wie Bis-(N,N-dimethylamino)-diethylether, Dimethylaminocyclohexan, N,N-Dimethylbenzylamin, N-Methylmorpholin sowie die Umsetzungsprodukte von Dialkyl-(beta-hydroxyethyl)-amin mit Monoisocyanaten und Veresterungsprodukte von Dialkyl-(beta-hydroxyethyl)-amin mit Dicarbonsäuren einsetzbar. Ein weiterer wichtiger Beschleuniger ist das 1,4-Diamino-bicyclo-(2.2.2)-octan. Ferner können nichtbasische Substanzen als Beschleuniger verwendet werden. Hier seien Metallverbindungen genannt, beispielsweise Eisenpentacarbonyl, Nickeltetracarbonyl, Eisenacetylacetonat sowie Zinn-(II)-(2-ethylhexoat), Dibutylzinndilaurat oder Molybdänglykolat.

Geeignete Lösungsmittel sind zum Beispiel solche, die nicht it Isocyanatgruppen reagieren wie halogenierte Kohlenwasserstoffe, Ester, Ketone und/oder aromatische Kohlenwasserstoffe. Die erfindungsgemäßen 2-Komponenten-Polyurethan-Systeme werden bis zu ihrer Anwendung zweikomponentig gelagert, d. h. die Polyolverbindung und die Isocyanatverbindung werden getrennt aufbewahrt.

Die Erfindung betrifft des weiteren ein Verfahren zur Herstellung und Verarbeitung eines Dämmörtels auf Basis eines 2-Komponenten-Polyurethan-Systems. Dieses Verfahren ist dadurch gekennzeichnet, daß die erfindungsgemäßen Mengen an Festkörperpartikeln, Reaktivkomponenten und gewünschtenfalls weitere Zuschläge und/oder Additive, innig miteinander vermengt, anschließend in die vorgegebenen Formen oder auch Hohlräume verfüllt und der Mörtel gewünschtenfalls an seiner Oberfläche geglättet wird. Das Vermengen oder Mischen der Bestandteile des Dämmörtels kann dabei in den im Baubereich üblichen Zementmischmaschinen durchgeführt werden. Dazu können zunächst die Festkörperpartikel, zum Beispiel Puffperlit, mit der Polyolkomponente gemischt werden und danach erst das innige Vermengen mit der Isocyanatkomponente erfolgen. Die gewünschtenfalls verwendbaren Zuschläge und/oder Additive können zumindest anteilsweise in einer oder beiden Reaktivkomponenten enthalten sein oder können separat zugemischt werden.

Der so hergestellte, anwendungsfertige, schnellabbindende Mörtel wird bevorzugt zur Herstellung schall- und/oder wärmeisolierender Bauteile, vorzugsweise in Form von Platten, verwendet. Die Herstellung

4

derartiger paßgenauer Bauteile kann zum Beispiel direkt auf der Baustelle erfolgen. Dabei wird vor allem der schnellabbindende Charakter des Dämmörtels ausgenutzt. d. h. die fortlaufenden Bauarbeiten werden nicht oder nur unwesentlich unterbrochen.

Desweiteren wird in einer besonderen Ausführungsform der Dämmörtel zum anteiligen oder vollständigen Verfüllen von Formen oder Hohlräumen, die jeweils beliebig gestaltet sein können, eingesetzt. Sind die Formen oder Hohlräume nicht vollständig geschlossen oder verschließbar, so kann der Mörtel nach dem Verfüllen gewünschtenfalls an seiner Oberfläche geglättet werden, zum Beispiel unter Zuhilfenahme einer Maurerkelle. Auch hier wirkt sich der schnellabbindende Charakter des Dämmörtels positiv auf ein schnelles Voranschreiten der Bauarbeiten aus. Dabei kann es z.B. besonders wichtig sein, daß nach relativ kurzer Zeit eine Begehbarkeit der hergestellten Platten, Formteile und/oder verfüllten Hohlräume gewährleistet ist.


## Beispiele


Zur weiteren Erläuterung der Erfindung werden folgende Beispiele angeführt.

Es sollte ein Dämmörtel auf Basis Puffperlit entwickelt werden, der folgende Anforderungen erfüllt:
- Topfzeit 5 bis 20 Minuten
- Begehbarkeit nach 1,5 bis 3 Stunden
- keine Oberflächenklebrigkeit nach 2 bis 3 Stunden Abbindezeit
- Drucktest mindestens 10 N/cm$^2$ nach 2 bis 3 Stunden Abbindezeit
- Zugestigkeit 0,5 N/cm$^2$ nach 2 Stunden Abbindezeit
- Wärmefestigkeit bis mindestens 80 $^\circ$C.

Zum Vergleich wurde ein nicht erfindungsgemäßes mineralisches Bindemittel, ein Wasserglas, eingesetzt.

Es wurden die jeweils in der folgenden Tabelle angegebenen Mengen in einem Zwangsmischer homogen vermischt. Nach dem beendeten Mischprozeß wurde der Dämmörtel in eine nach oben offenen Form mit den seitlichen Abmessungen 0,5m • 0,5 m (= 0,25 m$^2$) verfüllt und an der Oberfläche glatt verstrichen. Die Topfzeit des erfindungsgemäßen Dämmörtels betrug ca. 6 Minuten. Eine Begehbarkeit bzw. Trittfestigkeit wurde angenommen, wenn der Drucktest und der Zugfestigkeitstest die geforderten Werte erfüllten.

| Naturmaterial/Menge | Art | Körnung (mm) | Reaktivkomponenten | | Ergebnis |
|---|---|---|---|---|---|
| | | | (I) | (II) | |
| Polyurethan-Bindung erfindungsgemäß | | | oleochem. Polyol | Isocyanat MDI (techn.) | |
| Puff-Perlit/10 dm³ | hydrophobiert | 1 - 3 | 455 g | 295 g | nach 2 h trittfest |
| | hydrophobiert | 0 - 3 | 455 g | 295 g | nach 2,5 h trittfest |
| | nicht hydrophobiert | 0 - 3 | 455 g | 295 g | nach 5 h trittfest |
| Wasserglas-Bindung Vergleichsbeispiel, nicht erfindungsgemäß | | | Kali-Wasserglas $SiO_2 : K_2O = 1,85$ 24-25 Gew.-% Festkörperanteil | Triacetin | |
| Puff-Perlit/10 dm³ | hydrophobiert | 1 - 3 | 976 g | 93 g | wird nicht fest |
| | hydrophobiert | 0 - 3 | 976 g | 93 g | wird nicht fest |
| | nicht hydrophobiert | 0 - 3 | 976 g | 93 g | wird nicht fest |
| | nicht hydrophobiert | 0 - 3 | 1464 g | 100 g | wird nicht fest |

**Ansprüche**

1. Verwendung von 2-Komponenten-Polyurethan-Systemen als organische Bindemittel für schnellabbindende Dämmörtel mit isolierenden Eigenschaften auf Basis körniger, weitgehend reaktivwasserfreier Festkörperpartikel und gewünschtenfalls weiterer Zuschläge und/oder Additive.

2. Ausführungsform nach Anspruch 1, dadurch gekennzeichnet, daß der Dämmörtel zur Herstellung schall- und/oder wärmeisolierender Bauteile, vorzugsweise in Form von Platten, und/oder zum anteiligen oder vollständigen Verfüllen von Formen oder Hohlräumen bei Bauarbeiten zum Einsatz kommt.

3. Ausführungsform nach mindestens einem der vorstehenden Ansprüche, dadurch gekennzeichnet, daß als eine der beiden Komponenten des 2-Komponenten-Polyurethan-Systems Isocyanatverbindungen der Funktionalität 2 bis 10 (Reaktivkomponente (I)) und als zweite Komponente wenigstens weitgehend wasserfreie Polyole (Reaktivkomponente (II)) verwendet werden.

4. Ausführungsform nach mindestens einem der vorstehenden Ansprüche, dadurch gekennzeichnet, daß als Isocyanatverbindungen aliphatische Diisocyanate, insbesondere Isophorondiisocyanat und/oder Dicyclohexylmethandiisocyanat, und/oder arcmatische Diisocyanate, vorzugsweise Toluylendiisocyanat und/oder Diphenylmethandiisocyanat, eingesetzt werden.

5. Ausführungsform nach mindestens einem der vorstehenden Ansprüche, dadurch gekennzeichnet, daß als Isocyanatverbindungen Polyurethanpräpolymere mit im Mittel mindestens 2 Isocyanatgruppen pro Molekül, bevorzugt Adukte von aliphatischen und/oder aromatischen Diisocyanaten mit Di- und/oder Triolen, Verwendung finden.

6. Ausführungsform nach mindestens einem der vorstehenden Ansprüche, dadurch gekennzeichnet, daß als Reaktivkomponente (II) wenigstens anteilsweise oleochemische Polyole, insbesondere Rizinusöl und/oder Folgeprodukte epoxidierter Fettstoffe, bevorzugt Additionsprodukte aus epoxidierten Triglyceridölen mit $C_1$- bis $C_8$-Monoalkoholen, zum Einsatz kommen.

7. Ausführungsform nach mindestens einem der vorstehenden Ansprüche, dadurch gekennzeichnet, daß als Additionsprodukte alkoxylierte, bevorzugt ethoxylierte und/oder propoxylierte, Additionsprodukte eingesetzt werden.

8. Ausführungsform nach mindestens einem der vorstehenden Ansprüche, dadurch gekennzeichnet, daß die oleochemischen Polyole in Abmischung mit niedermolekularen Polyolen und/oder Aminen, insbesondere Glycerin, Trimethylolpropan, Diglycerin, Polyglycerin, Ethylendiamin, Triethanolamin, Methyldiethanolamin und/oder deren Alkoxylierungsprodukten, bevorzugt Ethoxylierungs- und/oder Propoxylierungsprodukten, verwendet werden.

9. Ausführungsform nach mindestens einem der vorstehenden Ansprüche, dadurch gekennzeichnet, daß als Zuschläge übliche Füllstoffe, wie Kreide, Kalkmehl, Kieselsäure und/oder Zeolithpulver insbesondere in Abmischung mit der Reaktivkomponente (II), Verwendung finden.

10. Ausführungsform nach mindestens einem der vorstehenden Ansprüche, dadurch gekennzeichnet, daß als Additive übliche Hilfsstoffe, wie Beschleuniger, Stabilisatoren, Lösungsmittel, Weichmacher, Flammschutzmittel, Pigmente, Alterungsschutzmittel und/oder Verzögerer eingesetzt werden.

11. Ausführungsform nach mindestens einem der vorstehenden Ansprüche, dadurch gekennzeichnet, daß als körnige Festkörperpartikel Mineral- und/oder Kunststoffpartikel, bevorzugt mit einer porigen Struktur, eingesetzt werden.

12. Ausführungsform nach mindestens einem der vorstehenden Ansprüche, dadurch gekennzeichnet, daß porige Mineralstoffe mit zumindest überwiegend körniger Struktur, insbesondere mit einer mittleren Größtkorngröße von 0,1 bis 10 mm, bevorzugt 1 bis 6 mm, verwendet werden.

13. Ausführungsform nach mindestens einem der vorstehenden Ansprüche, dadurch gekennzeichnet, daß als porige Mineralstoffe Perlite bzw. Puffperlit, insbesondere hydrophobierte Puffperlit, zum Einsatz kommen.

14. Ausführungsform nach mindestens einem der vorstehenden Ansprüche, dadurch gekennzeichnet, daß das organische Bindemittel in Mengen von 25 g bis 150 g, vorzugsweise 50 g bis 100 g, insbesondere 70 g bis 80 g, pro 1 dm³ porigen Mineralstoffs eingesetzt werden.

15. Ausführungsform nach mindestens einem der vorstehenden Ansprüche, dadurch gekennzeichnet, daß die Reaktivkomponente (I), bevorzugt mit einem NCO-Gehalt von 28 bis 32 Gew.-%, insbesondere etwa 31 Gew.-%, und die Reaktivkomponente (II), bevorzugt mit einer OH-Zahl von 220 bis 300, insbesondere 250 bis 270, in einem Verhältnis von 50:100 bis 75:100, insbesondere 60:100 bis 70:100, eingesetzt werden.

16. Verfahren zur Herstellung und Verarbeitung eines Dämmörtels auf Basis eines 2-Komponenten-Polyurethan-Systems, dadurch gekennzeichnet, daß die erfindungsgemäßen Mengen an Festkörperpartikeln, Reaktivkomponenten und gewünschtenfalls weitere Zuschläge und/oder Additive innig miteinander vermengt, anschließend in die vorgegebenen Formen oder Hohlräume verfüllt und der Mörtel gewünschtenfalls an seiner Oberfläche geglättet wird.